# EUROPÄISCHE PATENTSCHRIFT

(11) **EP 1 343 961 B1**
(45) Veröffentlichungstag und Bekanntmachung des Hinweises auf die Patenterteilung: **26.07.2006**
(21) Anmeldenummer: 01953108.6
(22) Anmeldetag: 16.06.2001
(51) Int. Cl.: F02F 3/00, F02F 3/18, F02F 3/26

(54) **KÜHLKANALKOLBEN FÜR EINEN DIESELMOTOR MIT DIREKTEINSPRITZUNG**
COOLING DUCT PISTON FOR A DIRECT-INJECTION DIESEL ENGINE
PISTON A CANAL DE REFROIDISSEMENT POUR MOTEUR DIESEL A INJECTION DIRECTE

(30) Priorität: 20.12.2000 DE 10063568
(43) Veröffentlichungstag der Anmeldung: 17.09.2003
(73) Patentinhaber: MAHLE GMBH, D-70376 Stuttgart (DE)
(72) Erfinder: BISCHOFBERGER, Ulrich, 73732 Esslingen (DE); SCHULZ, Joachim, 70374 Stuttgart (DE)
(86) Internationale Anmeldenummer: PCT/DE2001/002261
(87) Internationale Veröffentlichungsnummer: WO 2002/050414

(56) Entgegenhaltungen:
- EP-A- 0 330 005
- EP-A- 0 787 898
- US-A- 6 032 619

## Beschreibung

Die Erfindung betrifft einen Kühlkanalkolben für einen Dieselmotor mit Direkteinspritzung.

Derartige Kolben sind bisher meist als gegossene Aluminiumkolben oder als sogenannte Pendelschaftkolben ausgeführt und werden serienmäßig von vielen KFZ-Herstellern eingesetzt.

Die Erfindung beschäftigt sich mit dem Problem, ein Kolbenkonzept zu finden, das bei gleichbleibender oder steigender Motorleistung eine Verkleinerung der Kompressionshöhe des Kolbens zuläßt.

Dieses Problem wird bei gattungsgemäßen Kolben gelöst durch eine Ausgestaltung mit den in Anspruch 1 angegebenen Merkmalen. Vorteilhafte Weiterbildungen sind Gegenstand der Unteransprüche. Die Kompressionshöhe erfindungsgemäßer Kolben liegt im Bereich von 0,35 bis 0,6 x Kolbendurchmesser und vorzugsweise bei ca. 0,4 bis 0,45 x Kolbendurchmesser (D).

Das zweite, die Verbrennungsmulde beinhaltende Teil kann als bearbeitetes Schmiedeteil ausgeführt sein.

Die Erfindung wird im folgenden anhand eines Ausführungsbeispiels näher erläutert. Es zeigt:

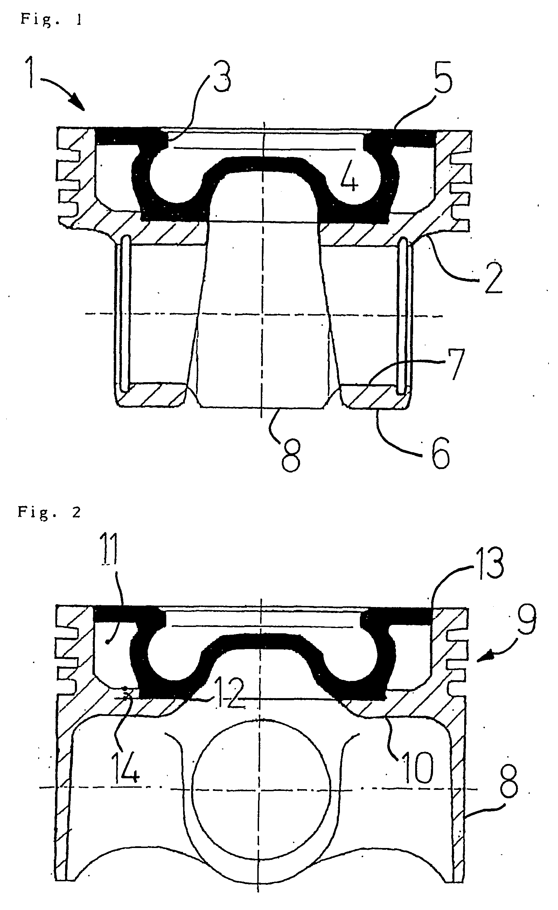

- Fig. 1: einen erfindungsgemäßen Kolben im Querschnitt, geschnitten in Bolzenrichtung
- Fig. 2: einen erfindungsgemäßen Kolben im Querschnitt, geschnitten in Druck-Gegendruck-Richtung.

Der Kolben 1 besteht aus einem Grundkörper 2 und einem mit diesem verlöteten Bauteil 3, das eine Verbrennungsmulde 4 und einen Teil des Kolbenbodens 5 beinhaltet. Der Grundkörper beinhaltet die Naben 6 mit den Nabenbohrungen 7, den Schaft 8, die Ringpartie 9 und Stege 10, die druckseitig und gegendruckseitig einen Teil der Innenform des Kolbens bilden. Die Stege 10 verlaufen auf gleichbleibender oder etwa gleichbleibender axialer Höhe nach radial innen und bilden in Druck-Gegendruck-Richtung eine Auflagefläche für das Bauteil 3. Die Verbrennungsmulde 4 liegt mit ihrem unteren Bereich umlaufend auf bearbeiteten Flächen der Stege 10 und im Bereich der Naben bzw. Nabenabstützung auf, wobei die bearbeiteten Flächen der Stege und der Nabenabstützung in einer Ebene liegen und durch die Bearbeitung eine Eindrehung mit einem Höhenunterschied 14 in den Stegen gebildet ist.

Bei weiteren erfindungsgemäßen Ausführungsformen kann die Verbrennungsmulde anstatt umlaufend auch nur lokal auf der Nabenabstützung und den Stegen 10 aufliegen.

Der Schaft des Kolbens ist in Bolzenrichtung zurückgenommen und bildet eine Kastenform. Der Grundkörper 2 und das mit diesem verlötete Bauteil 3 bilden gemeinsam einen mit Motoröl befüllbaren Kühlkanal 11.

Der Grundkörper 2 besteht aus geschmiedetem AFP-Stahl. Das Bauteil 3 besteht ebenfalls aus Stahl, kann aber auch aus einem hochtemperaturfesten Nickelbasiswerkstoff bestehen.

Der Grundkörper 2 und das Bauteil 3 sind durch eine radiale Lötnaht 12 und eine axiale Lötnaht 13 miteinander verbunden.

Der zentrale Teil der Verbrennungsmulde 4 bildet mit seiner nach unten weisenden Fläche einen Teil der Innenform des Kolbens.

Die Kompressionshöhe des Kolbens liegt bei 0,43 x D.

## Patentansprüche

1. Kühlkanalkolben (1) für einen Dieselmotor mit Direkteinspritzung mit den Merkmalen
- der Kolben (1) besteht aus mindestens zwei miteinander verlöteten Teilen (2,3), von denen ein Teil ein aus Stahl geschmiedeter Kolbengrundkörper (2) mit Schaft (8), Naben (6) und Ringpartie (9) ist und das zweite, aus Stahl oder einem Nickelbasiswerkstoff bestehende Teil (3) eine Verbrennungsmulde (4) und zumindest einen Teil des Kolbenbodens (5) beinhaltet, und wobei der Kolbengrundkörper (2) und das zweite Teil (3) gemeinsam einen mit Öl befüllbaren Kühlkanal (11) bilden,
- das zweite Teil (3) sitzt mit dem unteren Bereich der Verbrennungsmulde (4) in Bolzenrichtung über den Naben (6) auf dem Grundkörper (2) und in Druck-Gegendruckrichtung auf vom Schaft (8) oder von der Ringpartie (9) nach radial innen verlaufenden Stegen (10) des Grundkörpers, wobei die Auflageflächen in Druck-Gegendruckrichtung und in Bolzenrichtung in derselben maschinell bearbeiteten Ebene liegen und Grundkörper (2) und Verbrennungsmulde (4) in dieser Ebene miteinander verlötet sind und wobei zumindest die dem Kolbenboden zugewandte(n) Oberfläche bzw. Oberflächen der Stege (10) auf gleichbleibender oder etwa gleichbleibender axialer Höhe verlaufen, gegebenenfalls abgesehen von dem Höhenunterschied (14), der durch eine den untersten Bereich der Verbrennungsmulde (4) aufnehmende Eindrehung gebildet ist und abgesehen von Verrundungsradien im Übergang vom Steg (10) zum Schaft (8) bzw. zur Ringpartie (9),
- der zentrale Bereich der Verbrennungsmulde bildet mit seiner nach unten weisenden Fläche und seiner nach radial innen weisenden Fläche einen Teil der Innenform des Kolbens,
- die Kompressionshöhe KH liegt im Bereich von 0,35 bis 0,6 x D, wobei die KH die axiale Distanz zwischen Mittelachse der Nabenbohrungen und Oberkante Kolbenboden darstellt,
- Grundkörper (2) und zweites Bauteil (3) sind durch eine axial verlaufende Lötnaht (13) im Bereich des Kolbenbodens oder durch eine im Bereich des Feuerstegs liegende Radialnaht miteinander verbunden.

2. Kühlkanalkolben nach Anspruch 1,
**dadurch gekennzeichnet,**
**daß** der Kolbengrundkörper aus AFP-Stahl besteht.

3. Kühlkanalkolben nach einem der vorhergehenden Ansprüche,
**dadurch gekennzeichnet,**
**daß** die die Naben beinhaltenden Schaftwände des Kolbens in Bolzenrichtung auf eine Breite von < 0,8 x Kolbendurchmesser zurückgenommen sind.

4. Kühlkanalkolben nach einem der vorhergehenden Ansprüche,
**dadurch gekennzeichnet,**
**daß** die Oberkante eines mit dem Kolben verbundenen Pleuels auf Höhe des unteren Bereichs der Verbrennungsmulde liegt.

5. Kühlkanalkolben nach einem der vorhergehenden Ansprüche,
**dadurch gekennzeichnet,**
**daß** der Kolbendurchmesser < 100 mm beträgt.

## Claims

1. Cooling duct piston (1) for a diesel engine with direct injection, having the characteristics:
- the piston (1) consists of at least two parts (2, 3) soldered to one another, one of which is a piston base body (2) forged from steel, having a shaft (8), hubs (6), and a ring part (9), and the second part (3) made of steel or a nickel-based material, comprises a combustion trough (4) and at least part of the piston head (5), and whereby the piston base body (2) and the second part (3) together form a cooling duct (11) that can be filled with oil,
- the second part (3) is seated on the base body (2) above the hubs (6) in the pin direction, with the lower region of the combustion trough (4), and on the ridges (10) of the base body that run from the shaft (8) or from the ring part (9) radially towards the inside, in the pressure/counter-pressure direction, whereby the contact surfaces in the pressure/counter-pressure direction and in the pin direction lie in the same mechanically machined plane, and the base body (2) and the combustion trough (4) are soldered to one another in this plane, and whereby at least the surface or surfaces of the ridges (10) that face the piston head run at an axial height that remains the same or approximately the same, if applicable aside from the height difference (14) that is formed by a turned groove that holds the lowest region of the combustion trough (4), and aside from rounding radii in the transition from the ridge (10) to the shaft (8) or to the ring part (9), respectively,
- the central region of the combustion trough forms a part of the inside shape of the piston with its surface that faces downward and its surface that faces radially inward,
- the compression height KH lies in the range of 0.35 to 0.6 x D, whereby the height KH represents the axial distance between the centre axis of the hub bores and the upper edge of the piston head,
- the base body (2) and the second component (3) are connected with one another by means of a solder seam (13) that runs axially, in the region of the piston head, or by means of a radial seam that lies in the region of the top land.

2. Cooling duct piston according to claim 1,
**characterised in that**
the piston base body is made from AFP steel.

3. Cooling duct piston according to one of the preceding claims,
**characterised in that**
the shaft walls of the piston that contain the hubs are recessed to a width of <0.8 x piston diameter in pin direction.

4. Cooling duct piston according to one of the preceding claims,
**characterised in that**
the upper edge of a rod connected with the piston lies at the level of the lower region of the combustion trough.

5. Cooling duct piston according to one of the preceding claims,
**characterised in that**
the piston diameter is < 100 mm.

## Revendications

1. Piston à canal de refroidissement (1) pour un moteur Diesel à injection directe présentant les caractéristiques suivantes
- le piston (1) est constitué d'au moins deux parties (2, 3) brasées l'une à l'autre, dont une partie est un corps de base (2) en acier forgé avec jupe (8), bossages (6) et zone de segmentation (9) et la deuxième partie (3) constituée d'acier ou d'un matériau à base de nickel comprend une cavité de combustion (4) et au moins une partie de la tête du piston (5), et le corps de base (2) du piston et la deuxième partie (3) constituant ensemble un canal de refroidissement (11) pouvant être rempli d'huile,
- la deuxième partie (3) repose par la zone inférieure de la cavité de combustion (4), dans la direction de l'axe, au-dessus des bossages (6) sur le corps de base (2) et dans la direction pression/contre-pression sur des traverses (10) du corps de base, s'étendant radialement vers l'intérieur à partir de la jupe (8) ou de la zone de segmentation (9), les surfaces d'appui dans la direction pression/contre-pression et dans la direction de l'axe se situant dans le même plan usiné mécaniquement et le corps de base (2) ainsi que la cavité de combustion (4) étant brasés l'un à l'autre dans ce plan et au moins la surface ou les surfaces des traverses (10) orientée(s) vers la tête de piston s'étendant à hauteur axiale identique ou sensiblement identique, le cas échéant nonobstant la différence de hauteur (14) qui est formée par une gorge recevant la zone la plus inférieure de la cavité de combustion (4) et nonobstant les rayons d'arrondissement à la transition de la traverse (10) à la jupe (8) ou à la zone de segmentation (9),
- la zone centrale de la cavité de combustion forme une partie de la forme intérieure du piston, par sa surface orientée vers le bas et sa surface orientée radialement vers l'intérieur,
- la hauteur de compression KH est comprise dans un intervalle de 0,35 à 0,6 x D, la hauteur de compression KH représentant la distance axiale entre l'axe central des perçages des bossages et l'arête supérieure de la tête du piston,
- le corps de base (2) et la deuxième pièce de construction (3) sont reliés l'un à l'autre par un cordon de brasure (13) s'étendant axialement dans la zone de la tête de piston ou par un cordon radial situé dans la zone du cordon de feu.

2. Piston à canal de refroidissement selon la revendication 1,
**caractérisé en ce**
**que** le corps de base du piston est en acier AFP (acier ferritique-perlitique durcissant par précipitation).

3. Piston à canal de refroidissement selon l'une des revendications précédentes,
**caractérisé en ce**
**que** les parois de jupe du piston, contenant les bossages, dans la direction de l'axe sont ramenées à une largeur de < 0,8 x le diamètre du piston.

4. Piston à canal de refroidissement selon l'une des revendications précédentes,
**caractérisé en ce**
**que** l'arête supérieure d'une bielle reliée au piston se situe à la hauteur de la zone inférieure de la cavité de combustion.

5. Piston à canal de refroidissement selon l'une des revendications précédentes,
**caractérisé en ce**
**que** le diamètre du piston est < 100 mm.
